# EUROPÄISCHE PATENTSCHRIFT

(11) **EP 2 198 687 B1**
(45) Veröffentlichungstag und Bekanntmachung des Hinweises auf die Patenterteilung: **26.10.2011**
(21) Anmeldenummer: 08171906.4
(22) Anmeldetag: 17.12.2008
(51) Int. Cl.: A01F 15/14

(54) **Knotereinrichtung für eine landwirtschaftliche Großballenpresse**
Knot device for a large agricultural baler
Dispositif de noeud pour une presse à grandes balles agricole

(43) Veröffentlichungstag der Anmeldung: 23.06.2010
(73) Patentinhaber: Usines CLAAS France S.A.S., 57148 St. Rémy/Woippy CEDEX (FR)
(72) Erfinder: Hesselmann, Ulrich, 66706, Perl (DE)

(56) Entgegenhaltungen:
- EP-A- 0 075 637
- DE-A1- 3 032 908
- DE-A1- 3 937 228
- DE-A1-102004 055 134
- US-A- 3 722 934

## Beschreibung

Die Erfindung betrifft eine Knotereinrichtung für eine landwirtschaftliche Großballenpresse, insbesondere für landwirtschaftliches Erntegut nach dem Oberbegriff des Patentanspruchs 1. Eine solche Knotereinrichtung ist zum Beispiel aus der DE 103 29 136 A1 bekannt.

Um einen fertigen von einer Ballenpresse gepressten Ballen zusammenzuhalten sind Knotereinrichtungen mit einfacher oder zweifacher Knotenbildung bekannt, die im oberen Bereich an der horizontal und quer zum Presskanal angeordneten angetriebenen Knoterwelle gelagert und im unteren Rahmenbereich starr an der oberen Wand des Presskanals der Ballenpresse befestigt sind. Bei einer Knotereinrichtung zur Bildung eines einfachen Knotens befindet sich eine Halteeinrichtung, in der ein freies Ende eines Bindegarnstranges zeitweilig gehalten ist, auf einer Seite des Presskanals, eine Vorratsrolle, von der das Bindegarn abgewickelt wird, befindet sich auf einer anderen Seite des Presskanals, und der zu Beginn der Ballenbildung quer durch den Presskanal gespannte Bindegarnstrang wird im Laufe der Ballenbildung zunehmend weiter ausgelenkt, wobei er den Ballen auf drei Seiten umschlingt, bis der Ballen eine vorgegebene Länge erreicht hat. Wenn diese Länge erreicht ist, wird ein sich zwischen dem Ballen und der Vorratsrolle erstreckender Abschnitt des Bindegarnstranges von einer Bindenadel angehoben und mit Hilfe eines Knüpfers mit dem freien Ende des Bindegarnstranges verknotet. Ein freies Ende des dabei durchtrennten angehobenen Abschnitts des Bindegarnstranges wird in der Halteeinrichtung gehalten, so dass sich nach dem Verknoten wiederum ein Bindegarnstrang quer durch den Presskanal erstreckt und mit der Erzeugung des nächsten Ballens begonnen werden kann.

Da der Bindegarnstrang während der Ballenbildung an seinem freien Ende festgehalten werden muss und entsprechend dem Wachstum des Ballens nur von Seiten der Vorratsrolle aus weiteres Bindegarn zugeführt werden kann, steht der Bindegarnstrang während der gesamten Ballenbildung unter einer erheblichen Zugspannung. Für die Knotenbildung führt eine Bindenadel einen weiteren Bindegarnstrang zum Knüpfer der Knotereinrichtung, damit dieser die jeweiligen Enden zu einem Knoten zusammenführen kann. Während der Knotenbildung wird der von den Bindenadeln zugeführte Bindegarnstrang von einem Bindegarndrücker gegen den jeweiligen Knüpfer der Knotereinrichtungen gedrückt, damit eine optimale Knotenbildung vollziehbar ist. Aufgrund der immer höheren Pressdrücke expandiert das Pressgut in Fahrtrichtung gesehen nach vorn. Durch die Expansion wirkt gleichzeitig eine hohe Zugkraft auf das mittels der Bindenadeln den Knotereinrichtungen zugeführte Bindegarn, welches vom Bindegarndrücker während des Knotenbildungsprozesses gegen den Knüpfer gedrückt wird. Die Zugkraft des Bindegarns bewirkt ein Zurückverschwenken des Bindegarndrückers soweit, dass der Bindegarnstrang am Bindegarndrücker vorbei springen kann. Eine Fehlbindung ist die Folge. Öffnet sich dann der Bindegarndrücker wieder, kann es überdies zum Durchtrennen des Bindegarnstrangs kommen. Im Weiteren sind Schäden am Bindegarndrücker bzw, an der Knotereinrichtung möglich, welches einen zeit- und kostenintensiven Reparaturaufwand bedeutet.

Um das Problem zu lindern, sind aus dem Stand der Technik Knotereinrichtungen mit unterschiedlichen Halteeinrichtungen vorgeschlagen worden. Zur Erhöhung der Funktionssicherheit schlägt die DE-PS 30 32 908 vor, beide dem Knüpfer zugeführten Bindegarnabschnitte vor und während des Knotenabziehvorgangs festzuklemmen, damit die Bindegarnabschnitte vom expandierenden Ballen nicht nachgezogen werden. Nachteilig ist, dass einerseits einer hoher technischer und nicht zu vernachlässigende Kosten verursachender Aufwand erforderlich ist und wobei beim Auftreten von hohen Expansionskräften des Pressgules es weiterhin zum Bindegarnriss bzw. Schäden an der Knotereinrichtung kommen kann.

Aufgabe der vorliegende Erfindung ist, eine Knotereinrichtung derart auszubilden, die mit einfachen technischen Mitteln eine sichere Knotenbildung während des Knotenbildungsprozesses gewährleistet und die Gefahr von Bindefehlern und Schäden an der Knotereinrichtung verhindert.

Indem innerhalb eines in der Grundplatte einer Knotereinrichtung vorhandenen und der Zuführung eines Bindegarnstrangs zum Knüpfer dienenden Spaltes wenigstens ein die Spaltbreite begrenzendes Rückhalteelement zugeordnet ist, ist sichergestellt, dass die Zugkraft des Bindegarnstranges vom Rückhalteelement aufgenommen und somit das Öffnen des Bindegarndrückers verhindert und das Vorbeirutschen des Bindegarnstrangs am Bindegarndrücker vermieden wird. Dadurch ist ein störungsfreier Bindeprozess gewährleistbar, sodass hohe Reparaturkosten und kostenintensive Ausfallzeiten der Ballenpresse vermeidbar sind.

Im einfachsten Fall ist das Rückhalteelement ortsfest an der Grundplatte fixiert und in Fahrtrichtung der Ballenpresse hinter dem Drehpunkt des Bindegarndrückers angeordnet, so dass kostengünstig das Vorbeispringen des Bindegarnstrangs am Bindegarndrücker unterbunden werden kann.

In einer vorteilhaften Weiterbildung der Erfindung ist das Rückhalteelement hakenförmig in den Spalt der Grundplatte hineinragend ausgebildet und in die Grundplatte integriert, wobei die kürzere dem Knüpfer zugewandte Seite des Rückhalteelementes nahezu rechtwinkelig zum einen Spaltrand der Grundplatte und mittig den Spalt begrenzend angeordnet ist und die längere in Fahrtrichtung erstreckende Seite des Rückhalteelementes abgeschrägt zum einen Spaltrand der Grundplatte verläuft. Durch die Abschrägung kann der von der Bindenadel zugeführte Bindegarnstrang unproblematisch zum Knüpfer geführt werden. Wird dann der Bindegarnstrang durch das in Fahrtrichtung expandierende Erntegut gegen den Bindegarndrücker gedrückt, wird dieser nur soweit weit zurückgedrängt, bis der Bindegarnstrang von der rechtwinkelig zum Spaltrand angeordneten Seite des Rückhalteelementes aufgenommen wird. Vorteilhaft kann somit das Vorbeirutschen des Bindegarnstrangs am Bindgarndrücker verhindert werden. Vorzugsweise sind die mit dem Bindegarnstrang in Berührung kommenden Kanten des Rückhalteelementes abgerundet ausgebildet, so dass ein Durchreißen des Bindegarnstrangs verhindert werden kann.

Dadurch, dass in einer weiteren Ausgestaltung der Erfindung das Rückhalteelement in einem Drehpunkt an der Grundplatte schwenkbar angeordnet ist und das Verschwenken des Rückhaltelementes über einen von der jeweiligen Stellung des Bindegarndrückers abhängigen Steuermechanismus steuerbar ist, ist sichergestellt, dass durch Verschwenken des Rückhalteelementes aus dem Spalt der Grundplatte heraus, der Bindgarnstrang ungehindert von der Bindenadel zum Knüpfer der Knotereinrichtung zugeführt werden kann. Vorzugsweise nimmt das Rückhaltelement spätestens dann eine die Breite des in der Grundplatte vorliegenden Spaltes begrenzende Position ein, wenn der Bindegarndrücker den von einer Bindenadel zugeführten Bindegarnstrang gegen den Knüpfer drückt, so dass dann ein Vorbeispringen des Bindegarnstranges am Bindegarndrücker verhindert wird.

Eine besonders praktische und kostengünstige Ausgestaltung der Erfindung ergibt sich, wenn das Rückhalteelement gegen Federkraft in einem Drehpunkt in eine den Spalt freigebende Stellung in Fahrtrichtung verschwenkbar an der Grundplatte gelagert ist, so dass, wenn der Bindegarnstrang mittels des Bindegarndrückers dem Knüpfer zugeführt wird, das Rückhalteelement den Spalt freigebend unter die Grundplatte verschwenkbar ist und wenn der Bindegarnstrang dem Knüpfer zugeführt wird, das Rückhalteelement mittels der Federkraft automatisch in den Spalt verschwenkt, um das Vorbeispringen des Bindegarnstranges am Bindegarndrücker zu verhindern.

In einer weiteren vorteilhaften Ausgestaltung der Erfindung ist das Rückhalteelement in einem an der Grundplatte angeordneten Drehpunkt drehbar gelagert und über eine von der Knotenbildung abhängige Steuereinrichtung steuerbar.

In einer vorteilhaften Weiterbildung der Erfindung ist in der Grundplatte auf der dem Rückhalteelement gegenüberliegenden Seite eine den Maßen des Rückhalteelementes nahezu entsprechende Aussparung vorhanden, wobei der Kantenverlauf der Aussparung abgerundet ausgeführt ist, so dass sichergestellt ist, dass selbst Bindegarn mit größerem Durchmesser ungehindert durch den Spalt der Grundplatte dem Knüpfer zugeführt werden kann, wenn ein ortsfestes Rückhalteelement an der Grundplatte fixiert ist und dass das mit den Kanten in Berührung kommende Bindegarn keinen Bindegarnriss erleidet.

Die Erfindung ist bevorzugt auf eine Knotereinrichtung mit einfacher Knotenbildung anwendbar.

Die Beschreibung der Ausführungsbeispiele, aus der weitere Merkmale und Vorteile der Erfindung deutlich werden, nimmt Bezug auf die beigefügten Figuren.

Es zeigen:
- Fig. 1: eine schematische Seitenansicht des Presskanals einer Ballenpresse mit einer Knotereinrichtung
- Fig. 2: eine Knotereinrichtung in perspektivischer Ansicht mit einem erfin- dungsgemäßen Rückhalteelement mit einem Bindegarndrücker in einer entgegen der Fahrtrichtung verschwenkten Position
- Fig. 3: eine Knotereinrichtung in perspektivischer Ansicht mit einem erfindungs- gemäßen Rückhalteelement mit einem Bindegarndrücker in Fahrtrich- tung verschwenkten Position und im Eingriff mit einem Knüpfer

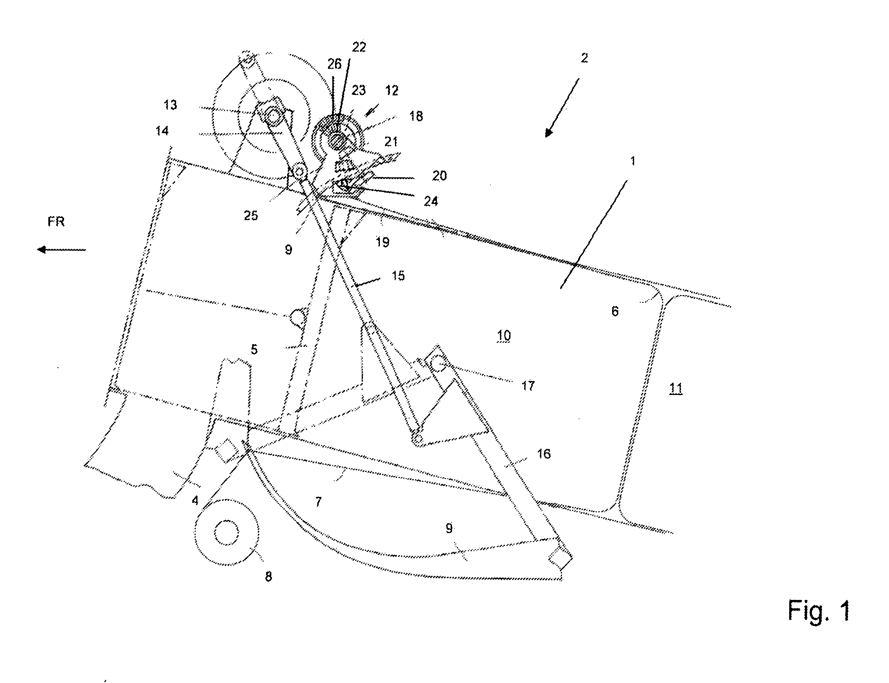

In dem in Fig. 1 teilweise dargestellten Presskanal 1 einer Ballenpresse 2 ist ein Presskolben 3 hin und her beweglich. Über einen von unten in den Presskanal 1 mündenden Zuführkanal 4 gefördertes Erntegut wird von dem Presskolben 5 gegen eine durch einen bereits fertigen quaderförmigen Ballen 6 gebildete Wand gepresst und dabei verdichtet. Ein Bindegarnstrang 7 erstreckt sich von einer Vorratsrolle 8 aus über die Spitze einer Bindenadel 9 entlang der Unterseite eines in Bildung befindlichen Ballens 10, über dessen dem fertigen Ballen 11 zugewandte Stirnfläche und zurück entlang der Oberseite des Ballens 10 zu einer noch näher darzustellenden Knotereinrichtung 12.

Sowohl die Bindenadeln 9 als auch die Knotereinrichtungen 12 werden über eine Vorgelegewelle 13 angetrieben, die an einen nicht dargestellten Hauptantried der Ballenpresse 2 ankuppelbar ist.

Der Antrieb der Bindenadeln 9 erfolgt über einen auf der Vorgelegewelle 13 angeordneten Kurbelarm 14, der die Drehbewegung der Vorgelegewelle 13 auf eine Zugstange 15 überträgt. Das Ende der Zugstange 15 ist mit einer Nadelschwinge 16 verbunden, die auf einer Achse 17 schwenkbar gelagert ist. Am freien Ende der Nadelschwinge 16 sind die Bindenadeln 9 befestigt.

Die Knotereinrichtungen 12 sind an die Vorgelegewelle 13 über eine Knoterwelle 18 gekoppelt. Ein freies Ende des Bindegarnstranges 19 ist an einem Bindegarnklemmrad 20 jeder Knotereinrichtung 12 geklemmt. Das Bindegarnklemmrad 20 ist drehfest mit einem Ritzel 21 verbunden, welches mit einem Zahnsegment 22 einer an der Knoterwelle 18 drehfest montierten Antriebsscheibe 23 kämmt. Ein an sich bekannter Knüpfer 24 der Knotereinrichtung 12 ist über ein weiteres Ritzel 25 an ein Zahnsegment 26 der Antriebsscheibe 23 gekoppelt. Beide Zahnsegmente 22, 26 erstrecken sich jeweils nur über einen Teil des Umfangs der Antriebsscheibe 23, so dass die Ritzel 22, 26 nur auf einem Teil der Drehung der Knoterwelle 18 drehangetrieben sind.

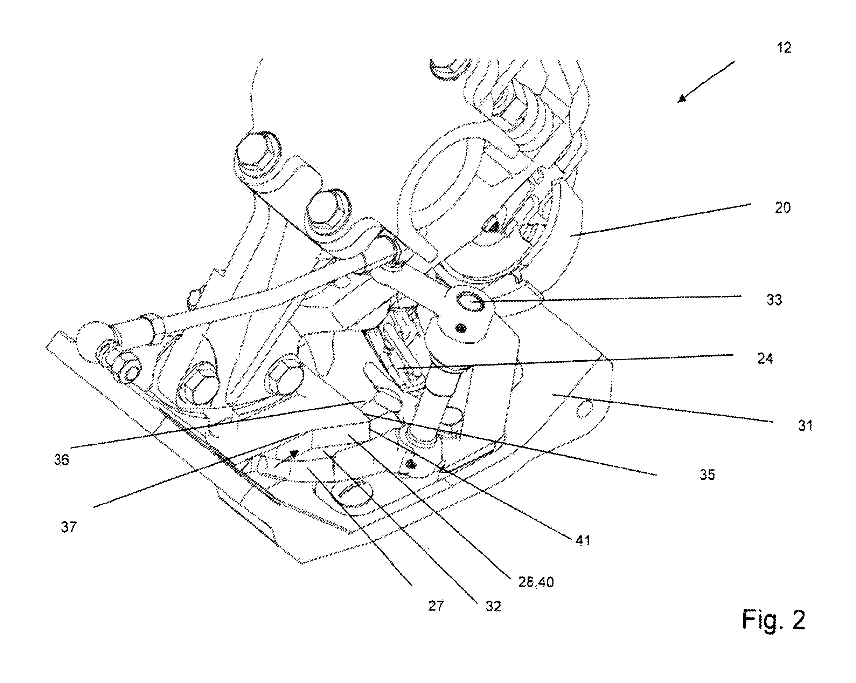

Da der Bindegarnstrang 7 während der Ballenbildung an seinem freien Ende 19 festgehalten werden muss und entsprechend dem Wachstum des Ballens 10 nur von Seiten der Vorratsrolle 8 aus weiteres Bindegarn 7 zugeführt werden kann, steht der Bindegarnstrang 7 während der gesamten Ballenbildung unter einer erheblichen Zugspannung. Für die Knotenbildung führen die Bindenadeln 9 einen weiteren Bindegarnstrang 7 zur Knotereinrichtung 12, damit mittels der Knüpfer 24 diese die jeweiligen Enden zu einem Knoten zusammenführen. Während der Knotenbildung wird der von der Bindenadel 9 zugeführte Bindegarnstrang 7 von einem an der Knotereinrichtung 12 angeordneten in Fig. 2 näher dargestellten Bindegarndrücker 27 an den Knüpfer 24 gedrückt. Aufgrund der immer höheren Pressdrücke expandiert das Pressgut in Fahrtrichtung FR gesehen nach vorn, so dass der von der Bindenadel 9 zugeführte und vom Bindegarndrücker 27 gehaltene und sich in Fahrtrichtung FR gesehen hinter dem Bindegarndrücker 27 befindende Bindegarnstrang 7 am Bindegarndrücker 27 in Fahrtrichtung FR vorbei springen kann, so dass es zu Fehlbindungen bis hin zum Bindegarnriss kommen kann.

Figur 2 zeigt nun eine Knotereinrichtung 12 mit einem erfindungsgemäßen Rückhalteelement 28 in einer perspektivischen Ansicht. Ein Knotenbildungsvorgang ist gerade gestartet worden. Der Bindegarndrücker 27 bewegt sich in Pfeilrichtung zum Bindegarnklemmrad 20 zur Positionierung des in Fig. 1 dargestellten Bindegarnabschnitts an dem Bindegarnleitfinger 29 neben dem vom Bindegarnklemmrad 20 gehalten und den Ballen teilweise umschlingenden weiteren in Fig. 1 dargestellten Bindegarnabschnitt. Eine Grundplatte 31 ist fest mit der Knotereinrichtung 12 verbunden.

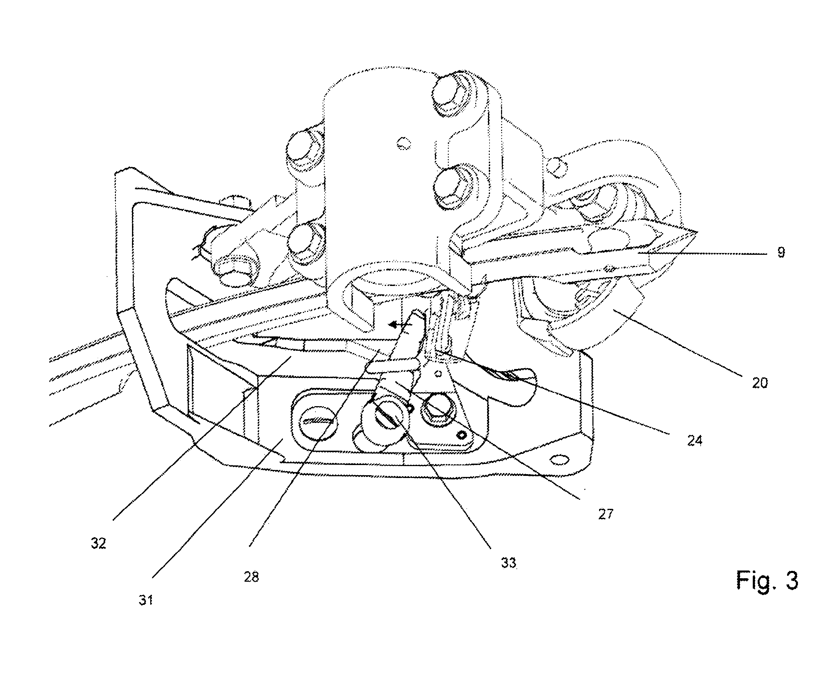

In Abhängigkeit von der jeweiligen Stellung der Bindenadeln 9 wird die gesamte Knotereinrichtung 12 mit ihren Funktionselementen selbsttätig um die in Fig. 1 dargestellte Knoterwelle 18 verschwenkt. Die Grundplatte 31 weist einen längs in Fahrtrichtung FR verlaufenden Spalt 32 auf, dessen Breite wenigstens so ausgebildet ist, dass die Bindenadeln 9 ungehindert durchschwenken können. Der an der Grundplatte 31 im Drehpunkt 33 drehbar gelagerte Bindegarndrücker 27 verschwenkt mit der Zuführung des Bindegarnstranges 7 durch die Bindenadeln 9 zum Knüpfer 24 von seiner hier gezeigten Ausgangsstellung in eine in Fig. 3 näher dargestellte Endstellung und drückt den Bindegarnstrang während des Knotenbildungsprozesses gegen den Knüpfer 24. Erfinddungsgemäß ist in der Grundplatte 31 ein Rückhalteelement 28 in Form eines in den Spalt 32 hineinragenden Hakens 40 integriert.

Das Rückhaltelement 28 besteht aus den gleichen Werkstoffen wie die Grundplatte 31 selbst. Die Nutzung anderer an sich bekannter Werkstoffe liegt im Rahmen der Erfindung. Die dem Knüpfer 24 zugewandte Seite 35 des Rückhalteelements 28 erstreckt sich rechtwinkelig vom einen Spaltrand 36 bis etwa zur Mitte des Spaltes 32. Die dem Knüpfer 24 abgewandte Seite 37 des Rückhalteelementes 28 erstreckt sich vom äußeren in den Spalt 32 hineinragenden Endpunkt 41 der dem Knüpfer 24 zugewandten Seite 35 abgeschrägt bis zum gleichen Spaltrand 36 der Grundplatte 31. Die Anordnung des Rückhalteelementes 28 ist so getroffen, dass die Bindenadeln 9 nach Auslösen des Bindevorgangs ungehindert durch den Spalt 32 der Grundplatte 31 der Knotereinrichtung 12 hindurch bewegt werden können, um den einen Bindegarnabschnitt 7 zur Knotenbildung dem Knüpfer 24 zuführen zu können. Der mittels der Bindenadeln 9 zugeführte Bindegarnstrang 7 ist dabei ungehindert über die abgeschrägt verlaufende Seite 37 des Rückhaltelementes 28 dem Knüpfer 24 zuführbar.

In der Darstellung gemäß Fig. 3 befindet sich der Bindegarndrücker 27 nun in seiner Endstellung. Der hier nicht näher dargestellte Bindegarnabschnitt ist dem Knüpfer 24 zugeführt worden und liegt mit dem weiteren in Fig. 1 dargestellten sich im Bindegarnklemmrad 20 befindenden Bindegarnabschnitt am Knüpfer an. Der Bindegarndrücker 27 drückt den weiteren Bindegarnstrang gegen den Knüpfer 24, der aus dem Durchtrennen des zuvor von der Bindenadel 9 zum Bindegarnklemmrad 20 hochgebrachten zweiten Bindegarnabschnitts entstanden ist. Der Knüpfer 24 fängt an sich zu drehen und die beiden in Fig. 1 dargestellten Bindegarnabschnitte werden um die Spitze des Knüpfers 24 gedreht. Der in Fig.1 dargestellte sich im Presskanal befindende Presskolben bewegt sich dabei in Fahrtrichtung FR weg vom gepressten Ballen. Das gepresste Erntegut expandiert in Fahrtrichtung FR und übt gleichzeitig eine Zugkraft auf den von der Bindenadel 9 zugeführten Bindegarnstrang aus. Diese enorme Kraftkomponente wirkt, wie oben bereits beschrieben, zudem auf den Bindegarndrücker 27. Der Bindegarndrücker 27 verschwenkt nun leicht in Pfeilrichtung um seinen Drehpunkt 33 bis der den Bindegarndrücker 27 wegdrückende Bindegarnstrang 7 vom hakenförmig ausgebildeten Rückhalteelement 28 aufgenommen wird. Der Bindgarndrücker 27 öffnet sich somit nicht weiter, so dass der Bindegarnstrang 7 nicht am Bindegarndrücker 28 vorbeirutschen kann.

In einer nicht dargstellten Ausführung kann das Rückhalteelement 28 in einem Drehpunkt an der Grundplatte 31 schwenkbar angeordnet sein, wobei das Verschwenken des Rückhaltelementes 28 über einen von der jeweiligen Stellung des Bindegarndrückers 27 abhängigen Steuermechanismus steuerbar ist, so dass das Rückhaltelement 28 aus dem Spalt 32 der Grundplatte 31 herausgeschwenkt werden kann, während die Bindegarnnadel 9 den Bindegarnstrang 7 zum Knüpfer 24 führt. Alternativ ist das Rückhalteelement 28 als nicht in die Grundplatte 31 integrierte Vorrichtung gegen Federkraft in einem nicht dargestellten Drehpunkt drehbar an der Grundplatte 31 gelagert, so dass, wenn der Bindegarnstrang 7 mittels der Bindenadel 9 dem Knüpfer 24 zugeführt wird, das Rückhalteelement 28 den Spalt 32 freigebend unter die Grundplatte 31 verschwenkbar ist und automatisch wieder in den Spalt 32 zurückverschwenkt, wenn die Bindenadel 9 aus den Spalt 32 heraus bewegt worden ist und der zugeführte Bindegarnstrang am Rückhalteelement 28 vorbeigeführt ist.

In einer vorteilhaften hier nicht näher dargestellten Weiterbildung der Erfindung ist in der Grundplatte 31 auf der dem Rückhalteelement 28 gegenüberliegenden Seite eine den Maßen des Rückhalteelementes 28 nahezu entsprechende Aussparung vorhanden, wobei der Kantenverlauf der Aussparung abgerundet ausgeführt ist, so dass sichergestellt ist, dass selbst Bindegarn mit größerem Durchmesser ungehindert durch den Spalt 32 der Grundplatte dem Knüpfer 24 zugeführt werden kann, wenn ein ortsfestes Rückhalteelement 28 an der Grundplatte 31 fixiert ist und dass das mit den Kanten in Berührung kommende Bindegarn keinen Bindegarnriss erleidet. Denkbar ist zudem, dass sämtliche Kanten des Spaltes 32 abgerundet ausgeführt sind.

Es liegt im Rahmen des Könnens eines Fachmanns das beschriebene Ausführungsbeispiel in nicht dargestellter Weise abzuwandeln, um die beschriebenen Effekte zu erzielen, ohne dabei den Rahmen der Erfindung zu verlassen.

### Bezugszeichenliste:

- 1: Presskanal
- 2: Ballenpresse
- 3: Presskolben
- 4: Zuführkanal
- 5: Ballen
- 6: Wand
- 7: Bindegarnstrang
- 8: Vorratsrolle
- 9: Bindenadel
- 10: Ballen
- 11: Stirnfläche
- 12: Knotereinrichtung
- 13: Vorgelegewelle
- 14: Kurbelarm
- 15: Zugstange
- 16: Nadelschwinge
- 17: Achse
- 18: Knoterwelle
- 19: Bindegarnstrang-Ende
- 20: Bindegarnklemmrad
- 21: Ritzel
- 22: Zahnsegment
- 23: Antriebsscheibe
- 24: Knüpfer
- 25: Ritzel
- 26: Zahnsegment
- 27: Bindegarndrücker
- 28: Rückhalteelement
- 29: Bindegarnleitfinger
- 30: Bindegarnabschnitt
- 31: Grundplatte
- 32: Spalt
- 33: Drehpunkt
- 34: Knüpfer
- 35: Seite des Rückhaltelementes
- 36: Spaltrand
- 37: Seite des Rückhaltelementes
- 38: Spaltrand
- 39: Aussparung
- 40: Haken
- 41: Endpunkt

- FR: Fahrtrichtung

## Patentansprüche

1. Knotereinrichtung (12) für eine Großballenpresse, insbesondere für landwirtschaftliches Erntegut, die oberhalb des Presskanals (1) auf einer angetriebenen Knoterwelle (18) gelagert ist bestehend aus einem au einer Grundplatte angeordneten Knüpferapparat (24) und einem Bindegarndrücker (27), wobei dem Knüpferapparat (24) eine Bindenadel (9) zur Zuführung des für die Umschnürung des gepressten quaderförmigen Ballen erforderlichen Bindegarns (7) zugeordnet ist,
**dadurch gekennzeichnet, dass**
dem innerhalb eines in der Grundplatte (31) vorhandenen und der Zuführung eines Bindegarnstrangs (7) zum Knüpfer (24) dienenden Spaltes (32) wenigstens ein die Spaltbreite begrenzendes Rückhalteelement (28) zugeordnet ist.

2. Knotereinrichtung nach Anspruch 1,
**dadurch gekennzeichnet, dass**
das Rückhalteelement (28) ortsfest an der Grundplatte (31) fixiert und in Fahrtrichtung FR der Ballenpresse (2) hinter dem Drehpunkt (33) des Bindegarndrückers (27) angeordnet ist.

3. Knotereinrichtung nach einem der vorhergehenden Ansprüche,
**dadurch gekennzeichnet, dass**
das Rückhalteelement (28) hakenförmig in den Spalt (32) hineinragend ausgebildet und in die Grundplatte (31) integriert ist, wobei die kürzere dem Knüpfer (24) zugewandte Seite (35) des Rückhalteelementes (28) nahezu rechtwinkelig und mittig den Spalt (32) begrenzend angeordnet ist und die längere sich in Fahrtrichtung FR erstreckende Seite (37) abgeschrägt zum Spaltrand (36) verläuft.

4. Knotereinrichtung nach einem der vorhergehenden Ansprüche,
**dadurch gekennzeichnet, dass**
in die Grundplatte (31) auf der dem Rückhalteelement (28) gegenüberliegenden Seite eine den Maßen des Rückhalteelementes (28) nahezu entsprechende Aussparung (39) vorhanden ist, wobei die Kante der Aussparung abgerundet ausgeführt ist.

5. Knotereinrichtung nach einem der vorhergehenden Ansprüche,
**dadurch gekennzeichnet, dass**
die mit dem Bindegarnstrang (7) in Berührung kommenden Kanten des Rückhalteelementes (28) abgerundet ausgebildet sind.

6. Knotereinrichtung nach einem der vorhergehenden Ansprüche,
**dadurch gekennzeichnet, dass**
das Rückhalteelement (28) in einem Drehpunkt schwenkbar an der Grundplatte (31) angeordnet ist und das Verschwenken des Rückhaltelementes (28) über einen von der jeweiligen Stellung des Bindgarndrückers (27) abhängigen Steuerungsmechanismus steuerbar ist.

7. Knotereinrichtung nach einem der vorhergehenden Ansprüche,
**dadurch gekennzeichnet, dass**
das Rückhaltelement (28) spätestens dann eine die Spaltbreite des in der Grundplatte (31) vorliegenden Spalts (32) begrenzende Position einnimmt, wenn der Bindegarndrücker (27) den von der Bindenadel (9) zugeführten Bindegarnstrang (7) gegen den Knüpfer (24) drückt.

8. Knotereinrichtung nach einem der vorhergehenden Ansprüche,
**dadurch gekennzeichnet, dass**
das Rückhalteelement (28) gegen Federkraft in einem Drehpunkt in eine den Spalt (32) freigebende Stellung in Fahrtrichtung FR verschwenkbar an der Grundplatte (21) gelagert ist.

9. Knotereinrichtung nach einem der vorhergehenden Ansprüche,
**dadurch gekennzeichnet, dass**
das Rückhaltelement (28) in einem Drehpunkt drehbar gelagert ist und über eine von der Knotenbildung abhängige Steuereinrichtung steuerbar ist.

10. Knotereinrichtung nach einem der vorhergehenden Ansprüche,
**dadurch gekennzeichnet, dass**
die Knotereinrichtung (12) für einfache Knotenbildung ausgelegt ist.

## Claims

1. A knotter (12) for a big bale press, in particular for agricultural crop material, which is mounted above the pressing passage (1) on a driven knotter shaft (18), comprising a knotting apparatus (24) arranged on a base plate and a binding yarn pushing member (27), wherein associated with the knotting apparatus (24) is a binding needle (9) for feeding the binding yarn (7) required for binding around the pressed parallelepipedic bale,
**characterised in that**
associated within a gap (32) present in the base plate (31) and serving for the feed of the binding yarn strand (7) to the knotting apparatus (24) is at least one retaining element (28) delimiting the gap width.

2. A knotter according to claim 1 **characterised in that** the retaining element (28) is stationarily fixed to the base plate (31) and in the direction of travel FR of the bale press (2) is arranged behind the pivot point (33) of the binding yarn pushing member (27).

3. A knotter according to one of the preceding claims **characterised in that** the retaining element (28) is adapted to project in a hook shape into the gap (32) and is integrated into the base plate (31), wherein the shorter side (35) of the retaining element (28), that is towards the knotting apparatus (24), is arranged almost at a right angle and centrally delimiting the gap (32) and the longer side (37) extending in the direction of travel FR extends inclinedly relative to the gap edge (36).

4. A knotter according to one of the preceding claims **characterised in that** provided in the base plate (31) on the side opposite the retaining element (28) is a recess (39) almost corresponding to the dimensions of the retaining element (28), wherein the edge of the recess is rounded.

5. A knotter according to one of the preceding claims **characterised in that** the edges of the retaining element (28), that come into contact with the binding yarn strand (7), are rounded.

6. A knotter according to one of the preceding claims **characterised in that** the retaining element (28) is arranged on the base plate (31) pivotably at a rotary point and the pivotal movement of the retaining element (28) is controllable by way of a control mechanism dependent on the respective position of the binding yarn pushing member (27).

7. A knotter according to one of the preceding claims **characterised in that** the retaining element (28) assumes a position delimiting the gap width of the gap (32) in the base plate (31) at the latest when the binding yarn pushing member (27) pushes the binding yarn strand (7) which is fed by the binding needle (9) against the knotting apparatus (24).

8. A knotter according to one of the preceding claims **characterised in that** the retaining element (28) is mounted on the base plate (21) pivotably in the travel direction FR against spring force at a rotary point into a position of clearing the gap (32).

9. A knotter according to one of the preceding claims **characterised in that** the retaining element (28) is mounted rotatably at a rotary point and is controllable by way of a control device dependent on knot formation.

10. A knotter according to one of the preceding claims **characterised in that** the knotter (12) is designed for simple knotting.

## Revendications

1. Dispositif de nouage (12) pour une presse à grosses balles, en particulier pour un produit agricole de récolte, qui est monté au-dessus du canal de pressage (1) sur un arbre de nouage (18) entraîné et est composé d'un appareil noueur (24) disposé sur une plaque de base et d'un presseur de ficelle de liage (27), une aiguille de liage (9) pour amener la ficelle de liage (7) nécessaire au ficelage de la balle parallélépipédique pressée étant associée à l'appareil noueur (24), **caractérisé en ce qu'**à l'intérieur d'une fente (32) ménagée dans la plaque de base (31) et servant à amener un brin de ficelle de liage (7) au noueur (24) est associé au moins un élément de retenue (28) qui limite la largeur de la fente.

2. Dispositif de nouage selon la revendication 1, **caractérisé en ce que** l'élément de retenue (28) est monté de manière fixe sur la plaque de base (31) et est disposé derrière le centre de rotation (33) du presseur de ficelle de liage (27) dans le sens de marche FR de la presse à balles (2).

3. Dispositif de nouage selon une des revendications précédentes, **caractérisé en ce que** l'élément de retenue (28) est réalisé en forme de crochet pénétrant dans la fente (32) et est intégré dans la plaque de base (31), le côté court (35) de l'élément de retenue (28) tourné vers le noueur (24) étant disposé à peu près perpendiculairement et de manière à limiter la fente (32) en son centre, et le côté long (37) qui s'étend dans le sens de marche FR s'étendant en biseau vers le bord de fente (36).

4. Dispositif de nouage selon une des revendications précédentes, **caractérisé en ce qu'**un évidement (39) correspondant à peu près aux dimensions de l'élément de retenue (28) est ménagé dans la plaque de base (31) du côté opposé à l'élément de retenue (28), l'arête de l'évidement étant arrondie.

5. Dispositif de nouage selon une des revendications précédentes, **caractérisé en ce que** les arêtes de l'élément de retenue (28) qui entrent en contact avec le brin de ficelle de liage (7) sont arrondies.

6. Dispositif de nouage selon une des revendications précédentes, **caractérisé en ce que** l'élément de retenue (28) est disposé de manière à pouvoir pivoter autour d'un centre de rotation sur la plaque de base (31) et le pivotement de l'élément de retenue (28) peut être commandé par un mécanisme de commande dépendant de la position respective du presseur de ficelle de liage (27).

7. Dispositif de nouage selon une des revendications précédentes, **caractérisé en ce que** l'élément de retenue (28) adopte une position qui limite la largeur de la fente (32) présente dans la plaque de base (31) au plus tard quand le presseur de ficelle de liage (27) presse le brin de ficelle de liage (7) amené par l'aiguille de liage (9) contre le noueur (24).

8. Dispositif de nouage selon une des revendications précédentes, **caractérisé en ce que** l'élément de retenue (28) est monté de manière à pouvoir pivoter autour d'un centre de rotation dans le sens de marche FR contre une force de ressort dans une position qui libère la fente (32).

9. Dispositif de nouage selon une des revendications précédentes, **caractérisé en ce que** l'élément de retenue (28) est monté de manière à pouvoir tourner autour d'un centre de rotation et peut être commandé par un dispositif de commande dépendant de la formation du noeud.

10. Dispositif de nouage selon une des revendications précédentes, **caractérisé en ce que** le dispositif de nouage (12) est conçu pour la formation de noeuds simples.
